# EUROPEAN PATENT APPLICATION

(11) **EP 4 675 381 A1**
(43) Date of publication of application: **07.01.2026**
(21) Application number: 24186563.3
(22) Date of filing: 04.07.2024
(51) Int. Cl.: G05B 19/418, G06Q 10/04, G06Q 10/06

(54) **COMPUTER-IMPLEMENTED METHOD AND SYSTEM FOR PLANNING A PRODUCTION PROCESS OF ELECTRONICS PRODUCTS WITHIN A TIME PERIOD OF A SEQUENCE OF TIME WINDOWS WITHIN A PLANNING TIME HORIZON**

(71) Applicant: Siemens Aktiengesellschaft, 80333 München (DE)
(72) Inventor: Fink, Rafael, 81829 München (DE); Wild, Tobias, 92526 Oberviechtach (DE)
(74) Representative: Siemens Patent Attorneys

(57) **Abstract**

The invention relates to a computer-implemented method for planning a production process of electronics products within a time period of a sequence of time windows within a planning time horizon, where the time period recurs at time intervals of a pre-defined length in a rolling horizon procedure until the entire planning time horizon has been planned, whereby the method comprises the following steps:
a) for every time period an optimization (OPT) uses initial input planning parameters and determines (03) production control parameters for each current time window in the current time period and hands them over (04) to a simulation (SIM)
b) which uses these production control parameters and simulates a course of the production process in detail (05) and which provides simulation results of the simulated course of the production process in the sequence of the first time windows within the time period, wherein these results are passed back (02) to the optimization (OPT)
c) which is repeated using updated input planning parameters, which are at least partly derived from said simulation results, for the next time interval that shifts the time period by a time interval of the pre-defined length of the rolling horizon procedure, and
d) steps a), b) and c) are repeated until the whole planning time horizon is simulated.

## Description

The invention relates to a computer-implemented method and a system for planning a production process of electronics products within a time period of a sequence of time windows within a planning time horizon, where the time period recurs at time intervals of a pre-defined length in a rolling horizon procedure until the full planning time horizon has been planned.

### BACKGROUND OF THE INVENTION

The invention can be applied in the world of process automation and process monitoring standard automation systems for controlling a wide conceivable variety of machines and plants. Such technology covers in particular a broad range of products which are produced in electronics production processes. In particular, the production process could cover a complete chain of mounting printed circuit boards (PCB), e.g. via SMT (surface mounting technology), testing and final assembly of electronic devices within a factory.

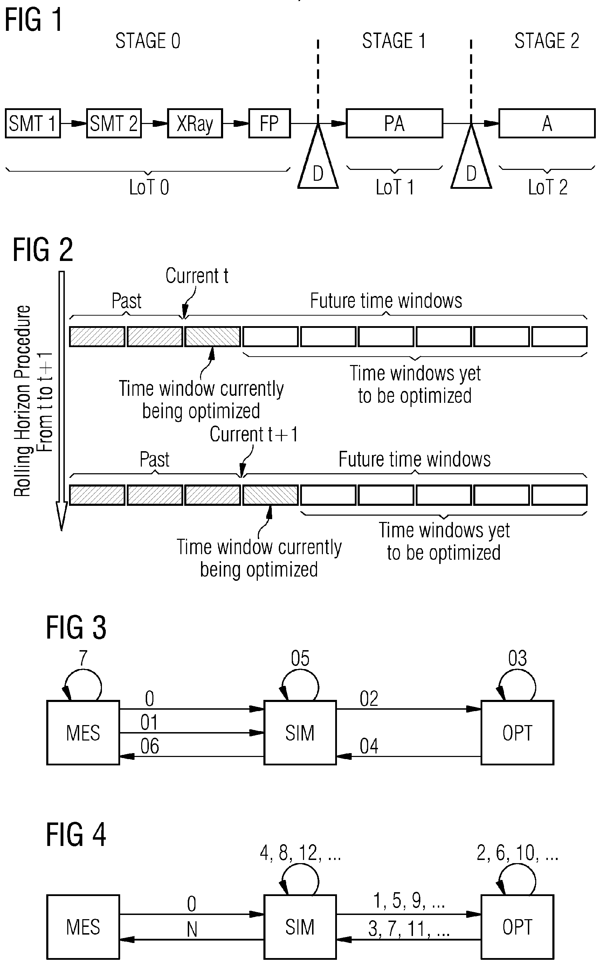

A production process is often characterized as described in the following. The production process can be a multi-stage production process:
- Products, in particular electronic products can consist of circuit boards, housing, plugs: Various finished products are produced. Each product is assigned to a product family. All products can be summarized under the term "hardware for factory automation". Example product groups are HMI (human machine interface), S7-1500, ET 200 SP, etc. The production can be organized in multiple production stages: In order to produce the finished products, a certain amount of intermediate products is needed. Not all intermediate products are directly assembled into the finished product. There are cases where two intermediate products are assembled together beforehand, forming a new intermediate product.
- Production steps can be: As shown in figure 1 step SMT - maybe more steps SMT like SMT1, SMT2, step THT (Through-Hole Technology), step ICT (In-Circuit Test), step FP (Flying Probe, Functional Test), and step Xray are running in a first stage STAGE0 and steps "pre-assembly" PA, "final assembly" A are further stages STAGE1 and STAGE2. For other products the stages might be defined also differently. In the SMT (Surface Mount Technology) process, electronic components are mounted and soldered onto circuit boards. A similar process occurs in the THT (Through-Hole Technology) process, where larger components are typically mounted. ICT (In-Circuit Test), FP (Flying Probe, Functional Test), and X-Ray are test processes that verify the quality of SMT and THT. In the Pre-Assembly stage, intermediate products are assembled into a new intermediate product. In the (final) assembly stage, these intermediate products are put into a housing and the resulting final product is packed for being sent to the customers. Mostly, not all process steps are necessarily required for every product.

- The production process is usually organized in stages and for each of these stages there are defined lots LOT0, LOT1, LOT2 which go through all necessary production steps of that stage in a bundle. E.g. LOT2 for the production of the final products on the final assembly stage and LOT0, LOT1 for the production of intermediate products, e.g. LOT0 which contains (amongst others) the PCB mounting (SMT). The lot sizes are production process parameters that need to be defined for every single intermediate and final product. For one simulation run the individual lot sizes are constant over time and given input parameters.
- The production process is decomposed via so-called supermarkets. That means that some intermediate products might not go directly from one process step to the next, but certain intermediate products can optionally also be stored in storages so-called supermarkets before the production process continues in the next production stage. In Figure 1 Decomposition/De-Coupling is marked with D. Some intermediate products might also be needed for different follow up products (production synergies, e.g. same PCB boards go in different final products) and additionally even the lot size of follow up products can change after a supermarket de-coupling. There is not necessarily a 1:1 relation between the production lots of intermediate products and the follow up production lots for the final products in which the intermediate products end up.

Within the environment of manufacturing execution systems, a software for production planning can be provided which concerns the sequencing and the timing of production operations/steps on all manufacturing resources. Usually, a value stream analysis could be done purely based on discrete-event simulation models which do the complete decision making internally based on priority rules, e.g. FIFO (first-in-first-out) or order backward termination.

Alternatively, purely capacity based calculations (e.g. in Excel) can also be utilized to define the crucial process control parameters like production capacities, lot sizes and safety stock levels of products or storage capacities.

Furthermore, there is also explicit production planning software like Opcenter APS or maybe Opcenter scheduling SMT (see https://plm.sw.siemens.com/en-US/opcenter/, https://plm.sw.siemens.com/en-US/opcenter/advanced-planning-scheduling-aps/) which is also not simulation based, but still relies on e.g. rule-based decision making or doesn't cover the whole production process.

There are some challenges making the planning and scheduling of such a production process very complex, especially when trying to take all relevant decisions in a monolithic simulation model. Some processes (e.g. SMT) require large sequence-dependent setup times (especially for SMT lines). Different BoPs (bill of process) and process durations per product as well as very different order quantities and order frequencies for different final products are also adding to the complexity of the production process. In a multi-stage production process there are further challenges like very different lot sizes (see above), same production resources are shared among a large variety of products that are produced, and last but not least the de-coupling of the individual production process stages where some intermediate products might be required for different final products (see above).

### SUMMARY OF THE INVENTION

It is therefore the object of the present invention to provide a method and system for planning a production process of electronics products within a planning time horizon. The invention should meet efficiency and sufficient quality concurrently.

The above-mentioned objective is achieved by a method and one or more apparatus or a system, preferably a distributed system, according to the features of the independent claims. Preferred embodiments of the invention are described in the dependent claims. Any combination of the features of the dependent claims to each other and with the features of the independent claims is possible.

An aspect of the invention is a computer-implemented method for planning a production process of electronics products within a time period of a sequence of time windows within a planning time horizon, where the time period recurs at time intervals of a pre-defined length in a rolling horizon procedure until the full/entire planning time horizon has been planned, whereby the method comprises the following steps:
a) for every time period an optimization uses initial input planning parameters and determines production control parameters for each current time window in the current time period and hands them over to a simulation
b) which uses these production control parameters and simulates a (underlying) course of the production process in detail and which provides simulation results of the simulated course of the production process in the sequence of the first time windows within the time period, wherein these results are passed back to the optimization
c) which is repeated using updated input planning parameters, which are at least partly derived from said simulation results, for the next time interval that shifts the time period by a time interval of the pre-defined length of the rolling horizon procedure, and
d) steps a), b) and c) are repeated until the whole planning time horizon is simulated.

Using this approach even long-term production scenarios in a given planning time horizon (e.g. more than 1 year) can be simulated via a detailed production process simulation that incorporates optimization-based decision making. The optimization iteratively solves the planning of several time periods (e.g. three weeks) within the planning time horizon, whereby the first optimization starts with a first time period which is broken down in time windows that together cover the whole time period (e.g. the first week is broken down in time windows, each representing a day, and the two following weeks are represented by one aggregated usually longer time window).

The course of the production process and/or scenario is simulated in the sequence of the first time windows (e.g. first, second day,...) within the time period (e.g. a week). The usually longer last time window that is part of the break down of the current time period is not yet simulated in detail, since it will be covered again in the next iteration of the rolling horizon procedure. It is considered in order to already anticipate the planning demands of the follow up time periods.

After the simulation of the detailed course of the production process, the optimization is repeated for the next time interval that shifts the time period (e.g. first week to a second week; second week to a third week and so on) by a time interval of the pre-defined length (e.g. one week) of the rolling horizon procedure.

The simulation of the complete planning horizon defines a production scenario which is used for a value stream analysis through which the most efficient production process configurations described by production control parameters can be identified. An example for these derived production control parameters are the different lot sizes for all intermediate and final products. Furthermore, the same procedure of combining optimization and simulation can be utilized to support operative (short-term) production planning for shorter planning time horizons and given values for the parameters that have been derived from a previous value stream analysis.

When using the described procedure in a value stream analysis one simulates different order scenarios over a planning time horizon (e.g. more than one year) in order to get planning information/parameters about important production key performance indicators (KPIs), e.g. factory throughput or delivery reliability, for different key parameter settings like production resource capacities, lot sizes per product or safety stock levels etc. In consequence, testing and simulating different parameters settings yields an optimized overall factory configuration and key performance indicators for the production process can be quantified. The underlying order scenarios can be either fictious or based on different forecasts, where orders for product production comprises delivery amounts and due dates at which the orders should be completed. When using the described procedure in a more operative (short-term) way it can enhance a daily or weekly production planning (answering the question which amounts should be produced for which products in which sequence on which resources). In this second option to use the describe approach the underlying order scenario is based on the actual customer orders at hand.

Production control parameters derived by the optimization for each time window can be used for controlling the production process. They are related to the amounts to be produced for each product per time window and the resulting stock level of each product at the end of each time window and/or delivery times for each product order.

The production process can be a multi-stage production process, whereby products are distinguished in intermediate products and final products, whereby intermediate products of an earlier production stage (can be a first and/or second,... production stage) are consumed in at least one succeeding production stage when producing another intermediate and/or final product.

Input planning parameters for the optimization are represented by production durations per product for each product step in the production process, demands for products - in particular final products - for all time windows within the time period and lot sizes per product, the initial stock level of products and/or a lower bound for the stock level for each product and/or overall production time-capacity of all production resources required for each product's production per time window and/or dependencies regarding production sequence of the production stages, if the production process is a multi-stage production process. Some of these input parameters like the initial stock levels can be the output of the last simulation.

Within the simulation further decision making happens, e.g. precise resource allocation (in case the optimization only decided based on resource pools), schedule of production steps on allocated resources (i.e. sequencing of orders and operations) and introduction of correct setup times in order to yield a detailed course of the production process on basis of the amounts of products optimized by the optimization. Intermediate products which are not directly consumed in a next production stage to produce another intermediate and/or final product, are stored in a storage until they are consumed. Also, with regards to the storing of products the simulation can be much more precise than the optimization model which uses just a rough approximation for this by purely looking on the storage levels at the end of each time window.

An objective function of the optimization is to minimize the sum of delays in product deliveries per order.

In addition, the objective function can include a term to reduce the stock level for products. Both terms of the objective function can be weighted.

Optimization can apply MILP (mixed integer linear programming).

A further aspect of the invention is a system for planning production of products within a time period of a sequence of time windows within a planning time horizon, where the time period recurs at time intervals of a pre-defined length in the rolling horizon procedure until the full planning time horizon has been planned, whereby the system comprises at least one processor which is configured to perform the above mentioned method and its embodiments.

Embodiments as described above for the method can be analogously applied for the system and for a computer program (product) and for the computer-readable storage medium.

This system can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:
- Figure 1: illustrates - as described in the background section - an example of process decoupling and the related batch/lot sizes;
- Figure 2: depicts a schematic overview how a rolling horizon procedure works; and
- Figure 3 and 4: each shows a schematic overview over the main information flows with a manufacturing executions system (MES) and the system(s) according to the present invention.

### DETAILED DESCRIPTION OF THE INVENTION

Figure 2 depicts a schematic overview how a rolling horizon procedure from a time interval t to t+1 works.

The term rolling horizon is used to indicate that a time-dependent model is solved repeatedly, and in which the planning interval is moved forward in time during each solution step (https://documentation.aimms.com/language-reference/advanced-language-components/time-based-modeling/implementing-a-model-with-a-rolling-horizon.html).

Looking at figure 2 there are boxes representing past time windows, a current time window being optimized and future time windows which are still to be optimized. From a time interval t the current time window is shifted to t+1.

For instance, the optimization solves a time period of the first 3 weeks within a planning time horizon (week one based on day time windows, also called time-buckets, weeks 2 and 3 in an aggregated way in order to already anticipate the demands of the follow up time periods). Then the production process is simulated in detail for the first week based on the optimization results of a first optimization determining production control parameters like the production amounts for all products in the corresponding time windows. The simulated situation with the simulation results at the end of week 1 is used as input for the next optimization run considering weeks 2-4 in the same way as previously, and being shifted by an interval of a pre-defined length e.g. one week. This process continues until the whole order scenario (e.g. planning time horizon of 2 years) has been simulated.

The following illustration explains the time-based decomposition and the rolling horizon planning methodology that is utilized. Assuming there is no production on weekends, one week only consists of 5 productive days:
1^{st} optimization: Optimize production for the first 15 days using the following six time buckets

| | | | | | |
|---|---|---|---|---|---|
| Day1 | Day2 | Day3 | Day4 | Day5 | Weeks 2 and 3 aggregated (10 days) |

Then 1^{st} simulation: detailed process simulation of the first 5 days.

2^{nd} optimization: Optimize production of days 6 to 20 using the following 6 time buckets

| | | | | | |
|---|---|---|---|---|---|
| Day6 | Day7 | Day8 | Day9 | Day10 | Weeks 3 and 4 aggregated (10 days) |

2^{nd} simulation: detailed process simulation of days 6-10 and so on.

Production planning needs a lot of data input in order to be able to generate a production schedule or plan. The most important data source is a system that holds or defines the BoP (Bill of process), which can be seen as a collection of specified sequencing and precedence and/or priority constraints (this system can be an MES system (manufacturing execution system)).

In this example a production environment is given with flexible machines for different production steps/operations. Each product order comes with a desired delivery date and an amount of products to be delivered. From the overall product demands a set of production operations can be deduced, which shall be processed in sequential production steps. Several production steps can belong to one production stage.

Figure 3 and 4 each illustrates (in the light of the afore-mentioned example) a schematic overview over the activities and the main information flows between an optimization system/component OPT operating the optimization and a simulation system/component SIM with a manufacturing execution system MES. The simulation system SIM can operate a so-called discrete event-based simulation method (https://en.wikipedia.org/wiki/Discrete-event_simulation) which processes a (discrete) sequence of events in time. Preferably the software Plant Simulation (https://en.wikipedia.org/wiki/Plant_Simulation) developed by Siemens Digital Industries Software can be used.

Any arrow numbered with numerals shall indicate a flow of data and/or data stream and/or method step. The optimization system uses an optimization method, preferably a so-called MILP-Model (mixed integer linear programming, https://en.wikipedia.org/wiki/Integer_programming). In the MILP-Model some or all of the variables are restricted to be integers. In many settings the term refers to integer linear programming (ILP), in which the objective function and the constraints (other than the integer constraints) are linear and all variables are integer. There are commercial and non-commercial MILP solvers like Gurobi, CPLEX, SCIP, etc.

Figure 3 shows a use case in the operative production planning (providing production plans iteratively and on the fly for each time period of a given planning time horizon, without generating a complete plan for the whole planning time horizon at first).

At 0 the MES system MES provides master data like all relevant orders, lot sizes and safety stock levels (including lower and/or upper bound), BoP's for each product with the corresponding sequence of production steps and stages (including the de-coupling points in the production process) that need to be done to produce a product, production durations per product for each product step in the production process and so on.

At 01 the simulation system obtains initial planning parameters from the MES system like initial stock levels, information about currently running operations, expected material delivery.

At 02 the simulation system sends the initial planning parameters for the current time period to the optimization system which determines optimized production control parameters for the current time period at 03 which are hand over to the simulation system at 04.

This approach now offers the opportunity that the simulation system decides in knowledge of production control parameters which come from an optimization system which considers the available capacities, order due dates, stock levels, lot sizes and the supermarket de-coupling of the overall production process (see under figure 1 and 2). The simulation SIM then takes the production amounts per product and time window and at 05 it simulates the production process in detail (e.g. now also taking into account exact sequencing and more accurate setup time estimations) and creates a detailed production plan including the production control parameters for the first time windows within the current time period. Since the simulation includes more realistic details of the production process there might occur small deviations in comparison to the calculated results of the optimization. At 06 the detailed production plan is sent to the MES system which executes the production plan in order to control the production process. After the plan execution the real initialization values (e.g. current stock levels) can be sent again to the simulation by starting the whole process all over from step 01 again. Steps 1 to 7 can be repeated until the entire planning time horizon is simulated and/or executed.

Figure 4 shows another form of operative production planning where (before the execution starts) a complete plan for the whole planning time horizon is simulated. So, the difference to the process depicted in figure 3 is that the MES doesn't receive any partial plans, but plans for the complete planning time horizon. In figure 4 step 0 can be seen as the aggregation of the two steps 0 and 1 in figure 3, they can be combined, since there are not any updates on actual initial stock levels for the simulation, because the production execution is not triggered before the entire plan is simulated. Therefore, the other steps in figure 4 are slightly differently numbered as in figure 3.

At 1 the simulation system sends the initial planning parameters for the current time period to the optimization system which determines optimized production control parameters for the current time period at 2 which are handed over to the simulation system at 3. The simulation SIM then takes the production amounts per product and time window and at 4 it simulates the production process in detail and creates a detailed production plan including the production control parameters for the first time windows within the current time period.

Steps 1 to 4 can be repeated until the entire planning time horizon is simulated.

In Figure 4 this is expressed with consecutive numbering e.g. 5, 6, 7 and 8 as well as 9, 10, 11 and 12 and so on. The input planning parameters are at least partly updated by the above mentioned (see 4, 8, 12, ...) simulation results and sent after each simulation to the optimization system for optimizing the next time period.

After N iterations the complete detailed production plan is sent to the MES system which executes this production plan in order to control the production process. Updates of that plan can be triggered in a rolling horizon procedure as well, so for example after one week or whenever there are new incoming orders for example.

The operational production execution can be monitored by the MES system and a monitoring feedback can be forwarded via the MES system to the simulation system in both approaches sketched (in figure 3 this happens within step 01, in figure 4 whenever the whole planning process is started all over again with step 0).

Due to the minimization of stock levels, a consequence of the optimization is the placing of the start time of an order in such a way that the order is completed as close to its due date as possible. Each order has a release date and a due date. Orders cannot be delivered early and no orders are lost, instead they will be delivered late, if a production in time isn't possible. The delay of an order delivery is also minimized by the optimization.

In the following a more detailed description of each separate system (optimization and simulation) as well as the mutual interaction between both systems is focused.

Detailed description of the mathematical optimization via mixed integer linear programming:
The (mathematical) optimization is done via a mixed integer linear program that can be solved by commercial or non-commercial solver software. The set of products is defined as all intermediate products that can be stored in a supermarket (see process-decoupling diagram in figure 1) and all final products.

The most important decisions that need to be taken by the mathematical optimization are the production amounts of all these intermediate and final products within each of the defined time windows/time buckets. For every combination of product and time bucket, a decision variable corresponding to the production amount that should be produced is introduced. Additionally, a constraint is defined that guarantees that the production amounts are always an integer multiple of the corresponding product lot size which is allowed to be used as a re-order amount. These production amounts serve as an input for each simulation run.

The production of an intermediate or final product goes along with a production capacity consumption for the production resources which execute the necessary process steps. Therefore, a variable for the capacity consumption of each product in each necessary process step and each time bucket is introduced. In contrast to the production amount variables, these variables can rather be considered as dependent variables and not as actual decision variables, since for each product the necessary process steps and the time which is required for each individual product to be produced in the corresponding process steps are known. If the example in figure 1 is considered again and when looking especially on the intermediate product that can be stored after the process steps SMT1, SMT2, Xray and FP, then all resources need to have sufficient capacities within the corresponding time bucket (e.g. day 1). In this context the steps SMT1 and SMT2 even require the same production resources! For example, if 100 units of that intermediate product are produced on day 1, the following production capacities on the corresponding resources is consumed: SMT: 100*(duration_SMT1 + duration_SMT2); Xray: 100*duration_Xray; FP: 100*duration_FP where the production durations per unit are product specific and given input. In order to make sure that the production capacities are available sufficiently, constraints are introduced that ensure that the overall capacity consumption for all production resources of all products produced on these resources within a time bucket are not being exceeded. The overall time-capacity of the production resources executing the necessary process steps are a given input for the optimization. When defining these input parameters, also default capacity reductions due to non-productive times like shift pauses, maintenance or setup times should be considered. If there are multiple resources available to execute a certain process step, these resources are treated as a resource pool with an aggregated overall available capacity. If it is crucial to differentiate the resources of a resource pool (e.g. since the resources are not identical and not all products can be produced on arbitrary resources of the resource pool), then this can be modeled as well. The available production time capacity per resource (pool) can either be modeled via hard constraints (no violation allowed) or via soft constraints (violations are allowed up to a certain degree, but violations have a negative consequence for the value of the objective function that is optimized). Combinations of hard and soft constraints are possible as well, e.g. available capacity per day of a week is modeled as a soft constraint, but the aggregated capacity of the complete corresponding week must not be exceeded (hard constraint).

The production of products not only consumes time capacity of the production resources but also the necessary input material. Getting back to the example in figure 1: When producing the intermediate product resulting from the pre-assembly step, a certain amount of the intermediate product that can be stored after the FP process step is consumed. Likewise, the production of the final product in the final assembly step consumes the intermediate product that results from the pre-assembly step. Of course, the production can only be executed, if sufficient input material is available, so this needs to be reflected in the optimization model as well by making sure that the stock levels of consumed input materials are decreased and the stock levels of output materials are increased in the correct ratio defined for every production step whenever a production process is planned.

The logic of the stock level recursion within the optimization model is very rough and can be summarized as follows: At first, variables representing the stock levels of each product at the end of each time bucket are introduced. That means that whenever the production of a product is planned, the corresponding consumed and produced amounts will influence the corresponding stock levels of the related products at the end of that time bucket (or - equally - at the beginning of the next time bucket). In other words: When the intermediate product resulting from the pre-assembly step is produced, the produced amount will be available for the next production stage (final assembly) only in the next time bucket (e.g. the next day), the stock levels for the input materials at the end of the day will be decreased accordingly. Stock levels are not only decreased by intermediate product consumption, but also by final product order delivery. This whole logic can be formulated in so-called stock level recursion constraints. In combination with additional constraints that impose a lower bound on the stock levels of each product (possibly also taking into account safety stock levels), it is sure that there will never occur material shortages and thus that production plans are feasible with regards to material availability. The shortcomings of these rough stock level recursion constraints can be compensated within the detailed production process simulation.

It is assumed that all of the orders need to be fulfilled completely. Orders are never delivered early, so, if there are enough final products already ahead of time, the corresponding amount is stored until the order delivery date. On the other hand, orders are never lost. That means that whenever the ordered amount of final products cannot be delivered in time, the delivery will be delayed until it can be delivered (so, there is more time to produce the required amounts of final products at a later point in time). This logic is reflected by the introduction of additional variables that decide upon the order delivery times for each order.

Having described the most important variables and constraints of the optimization model, the objective function is to be defined, that is the criteria to be optimized. The two most important criteria (any other aspects can be added optionally) are regarded. Firstly, the delays of order deliveries is minimized. Moreover, storage time /costs for intermediate products is reduced. Both aspects can be considered in our objective function by building the sum of the corresponding terms (maybe including cost factors for each term which can be used to weight the terms).

Detailed description of simulation how the optimization results are used in the simulation:
The simulation model is initialized before the start of the simulation.

Simulation initialization (setting up required data)

The processes that the intermediate products need to go through the stages (e.g., SMT, THT, etc.) are set up. The parameters for the processes, such as the number of stations, availability, and MTTR (mean time to repair), are filled in for each process.

Additionally, demand for finished products is defined for each time bucket (excluding weekends) and stored in the simulation model. Another step is the definition of the lot size. At any decoupling point for an intermediate product, as shown in figure 1, it is possible to have different lot sizes for both stages linked to the de-coupling point (the preceding and the succeeding production stage). If there is no decoupling point, there will also be only one lot size for the whole process chain as there is only one production stage.

The simulation model also needs to be enriched with information from a Bill of Materials (BOM). For example, if one or more intermediate products are required for the assembly of a finished/final product, this is initially indicated in the simulation model. The process chain, including the sequence, setup times, and process times for each product and intermediate product, is also stored in the simulation model.

In the next step, it is defined which products will be de-coupled and where by using supermarkets. The supermarkets are initially stocked with a certain quantity. Additionally, the supermarket determines the quantity for replenishing intermediate products. For example, if a product is stored in a supermarket before assembly and a reorder is necessary to maintain sufficient stock, a previously specified quantity or an integer multiple of it is ordered for internal production. However, in contrast to a conventional simulation model, in which a supermarket would trigger the production of (intermediate) products based on the question if the critical reorder point (the critical safety stock level) for that product has been reached, the production amounts are completely determined by the solution of the MILP (Mixed Integer Linear Programming) optimization. So, the production is no longer organized by static rules of conventional simulation models but instead based on the optimization preferably using MILP.

Running the simulation:
The MILP (Mixed Integer Linear Programming) is automatically called by the simulation - for instance - every seven days at the start of the week on Monday. The model provides the necessary information required by the MILP for the optimization. This includes for example: the demand for finished products for the next three weeks, the available capacity of each process, the current inventory of intermediate products in the supermarkets etc. While the MILP is calculating the solution, the simulation waits before continuing the simulation. Once the result is available in the form of a production plan, the first orders for the first day are used in the simulation model. After 24 hours, the orders for the second day are loaded into the simulation. This process is repeated five times until Friday. On the following Monday, a new/further optimization run is initiated. This procedure is repeated weekly until the end of the planning horizon (this process description belongs to the procedure e.g. shown in figure 3).

The controlled production orders can be managed in an order list. For example, if an assembly order for a specific day is planned according to the MILP, but there are not enough intermediate products available in the supermarket, the order remains in the list until the required material arrives at the supermarket. Therefore, while the optimization provides a production plan including production control parameters prescribed by the MILP, the simulation still needs to perform checks on material availability, as it would be the case in reality. The distribution of orders to individual processes and stations within the day is handled by the simulation. Various distribution logics can be set and implemented, such as FIFO, LIFO, or setup-optimized distribution, etc.

Interaction between optimization and simulation:
Since the optimization model usually models some aspects of the production process in a very rough way (e.g. capacity loss due to non-productive times like setup, no precise sequencing of production steps within time buckets, stock level recursion only for transition between time buckets), the simulation contributes significantly to the planning quality. The simulation uses the optimization results (production control parameters, especially the production amounts per product and day) and enhances the corresponding plans by assigning the different jobs to precise production resources, sequencing the production steps on the resources and deriving more realistic times for setup operations (thus getting a more realistic view on non-productive times on each resource). Furthermore, the simulation can easily get rid of the shortcomings of the rough stock level recursion that is being used within the optimization. That means that, the simulation is not forced to wait until the beginning of the next time bucket to use products that have been produced in the previous time bucket. For example, if the optimization model prescribes to produce 1000 units of an intermediate product and the simulation decides to do that in the early morning of the corresponding day, the resulting output could also be utilized in the next production stage in the afternoon of that same day already. That would not be feasible for the optimization model (alone), because the produced amounts would only become available at the beginning of the next day there.

The simulation still takes non-trivial decisions (e.g. process steps sequencing within a time bucket). There are also checks to be done, if operations of the next time bucket can already be done earlier (by checking, if there are still available production capacities and checking if all necessary input materials are already available).

The simulation uses the optimization results to simulate the course of the overall production process. In the following it is explained how the simulation results are transferred back to the next optimization run with a time shift of one week. This is done via an update of the current stock levels at the beginning of the next time period, an update of available capacities of the production resources for each of the next time buckets, and an update of relevant orders for this next time period. Optionally, also a frozen time zone of activities that need to be done still within the first time bucket can be communicated to the optimization model as well as production outputs that are still expected to arrive during the first time bucket due to currently ongoing activities.

The optimization doesn't need to incorporate every little detail of the complex production process and can instead focus on the crucial decisions to be taken (production amounts for all intermediate and final products per day). So, the solving process of the underlying optimization problems is much more efficient - even for production scenarios with a large number of products and orders. Even long-term simulation scenarios can be done within a reasonable time frame.

In order to compensate the shortcomings of the optimization with regards to not considering exact setup times or not doing any order sequencing within a time bucket, the role of the simulation is to give more realistic insights into the consequences of the decisions taken by the optimization. By enhancing the resulting plans with the missing information and further decision making (e.g. sequencing of orders for every resource within a day), the simulation can provide more realistic input data for the optimization of the next time period.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for planning a production process of electronics products within a time period of a sequence of time windows within a planning time horizon, where the time period recurs at time intervals of a pre-defined length in a rolling horizon procedure until the entire planning time horizon has been planned, whereby the method comprises the following steps:
a) for every time period an optimization (OPT) uses initial input planning parameters and determines (03) production control parameters for each current time window in the current time period and hands them over (04) to a simulation (SIM)
b) which uses these production control parameters and simulates a course of the production process in detail (05) and which provides simulation results of the simulated course of the production process in the sequence of the first time windows within the time period, wherein these results are passed back (02) to the optimization (OPT)
c) which is repeated using updated input planning parameters, which are at least partly derived from said simulation results, for the next time interval that shifts the time period by a time interval of the pre-defined length of the rolling horizon procedure, and
d) steps a), b) and c) are repeated until the whole planning time horizon is simulated.

2. Method according to the previous claim, wherein production control parameters at each time window are used for controlling the production process.

3. Method according to any of the preceding claims, wherein the production control parameters determined by said optimization are related to the amounts to be produced for each product per time window and the resulting stock level of each product at the end of each time window and/or delivery time for each product order.

4. Method according to any of the preceding claims, wherein the production process is a multi-stage production process, whereby products are distinguished in intermediate products and final products, whereby intermediate products of an earlier production stage are consumed in at least one succeeding production stage when producing another intermediate and/or final product.

5. Method according to any of the preceding claims, wherein input planning parameters represent production durations per product for each production step in the production process, demands for products for all time windows within the time period and lot size per product which can differ from lot size per intermediate product, the initial stock level of products and/or a lower bound for the stock level for each product and/or overall production time-capacity of all production resources required for each product's production per time window and/or dependencies regarding production sequence of the production stages, if the production process is a multi-stage production process.

6. Method according to any of the preceding claims, wherein simulation decides on resource allocation and/or sequencing of different production steps for different orders on allocated resources and uses correct setup times with regards to the taken sequencing decisions in order to yield a detailed course of the production process on basis of the production amounts of all products optimized by the optimization.

7. Method according to any of the preceding claims, wherein intermediate products which are not directly consumed are stored in a storage (SM) until they are consumed.

8. Method according to any of the preceding claims, wherein the last time window in the break down of the current time period is longer than the other time windows and aggregates the lookahead time which is not yet covered by the next simulation iteration.

9. Method according to any of the preceding claims, wherein an objective function of the optimization is to minimize the sum of delays in product deliveries per order.

10. Method according to the previous claim, wherein in addition the objective function is also designed to reduce stock levels for products.

11. System for planning production of products within a time period of a sequence of time windows within a planning time horizon, where the time period recurs at time intervals of a pre-defined length in rolling horizon procedure until the entire planning time horizon has been planned, whereby the system comprises at least one processor which is configured to perform the method according to any of the preceding method claims.

12. Computer program product whose computer program is being executed by one or more processors of a computer in order to perform a method according to any of the method claims 1 to 10.

13. Computer readable storage media with a computer program product according to the previous claim.
